# EUROPÄISCHE PATENTANMELDUNG

(11) **EP 3 865 751 A1**
(43) Veröffentlichungstag der Anmeldung: **18.08.2021**
(21) Anmeldenummer: 21156968.6
(22) Anmeldetag: 12.02.2021
(51) Int. Cl.: F16L 9/14, B32B 1/08

(54) **METALLROHR MIT SCHIEBEHÜLSE UND ROHRVERBUND**

(30) Priorität: 12.02.2020 DE 202020100759 U
(71) Anmelder: TDC International AG, 6004 Luzern (CH)
(72) Erfinder: WELKER, Daniel, Luzern (CH)
(74) Vertreter: Eisenführ Speiser

(57) **Zusammenfassung**

Die Erfindung betrifft einen Rohrverbund aus wenigstens zwei Metallrohren, die an ihren Stirnenden mittels einer Schweißnaht miteinander verbunden sind. Von den Metallrohren weist wenigstens eines an einem Rohrende eine ursprünglich längsverschiebliche Hülse auf, die bei dem Rohrverbund derart über die beiden nicht von einer Korrosionsschutzhülle bedeckten Endabschnitte der miteinander verschweißten Metallrohre gebildeten Verbindungsabschnitt geschoben ist, dass die Hülse den Verbindungsabschnitt über dessen gesamte Länge bedeckt. Wenigstens zwischen den beiden stirnseitigen Längsabschnitten der inneren Wandoberfläche der längsverschieblichen Hülse und der innen gegenüberliegenden Außenoberfläche der Metallrohre ist eine ursprünglich quellende Dichtmasse derart vorgesehen, dass die ursprünglich längsverschiebliche Hülse an ihren Stirnenden vollumfänglich dicht mit den stirnseitigen Längsabschnitten der miteinander verschweißten Metallrohre verbunden ist.

## Beschreibung

Die Erfindung betrifft ein Metallrohr mit einer Korrosionsschutzhülle und einer die Korrosionsschutzhülle umschließenden Schutzummantelung. Die Korrosionsschutzhülle wird vorzugsweise von einer Thermoplastummantelung des Metallrohres gebildet und die Schutzummantelung ist außen auf die Korrosionsschutzhülle aufgetragen und dient dem Schutz vor mechanischen Beschädigungen. Die Schutzummantelung besteht vorzugsweise aus einem faserverstärkten Duroplast.

Es ist bekannt, erdverlegte Stahlrohre zum Transport von flüssigen oder gasförmigen Medien mit einer relativ dünnen Ummantelung aus Kunststoff, bevorzugt aus Polypropylen Polyethylen, Fusion-bonded Epoxy (FBE) oder Polyurethan, zu versehen, um beispielsweise eine Korrosion des metallischen Rohrmaterials zu verhindern. Derartige Schichten aus Polypropylen, Polyethylen oder Polyurethan sichern einerseits einen ausgezeichneten Korrosionsschutz, da die Erdfeuchte mit dem metallischen Rohrmaterial nicht in Kontakt gelangen kann. Sie weisen aber andererseits in nachteiliger Weise nur einen relativ geringen mechanischen Schutz auf. Zum Schutz vor einer unerwünschten mechanischen Beschädigung der Polypropylen-, Polyethylen- oder Polyurethan-Ummantelung ist es bekannt, das Rohr zusätzlich mit einer Faserzement-hülle zu versehen oder alternativ mit einer Felsschutzmatte bauseitig zu beschützen. Die mechanische Schutzwirkung des Faserzementes ist limitiert inbesondere gegen Schlagfestigkeit und Bruchfestigkeit bei Biegung des Rohres. Die Installation einer Felsschutzmatte ist eine zeit- und kostenintensive Arbeit bauseitig.

Aus diesem Grunde kommt es im Falle einer offenen Verlegung in einem Graben häufig inbesondere bei Rückfüllung von grob-steinigem oder felsigem Aushub zu mechanischen Beschädigungen der dünnen und relativ weichen Polypropylen-, Polyethylen- oder Polyurethanschicht, so dass der Korrosionsschutz für das metallische Rohrmaterial lokal aufgehoben oder zumindest in unvertretbar hohem Maße eingeschränkt wird.

Für längere Rohrleitungen werden Rohre am Ort des Verlegens an ihren Stirnseiten miteinander verschweißt. Um verschweißt werden zu können, dürfen die zu verschweißenden Rohrenden nicht ummantelt sein. Nach dem Verschweißen müssen die verschweißten Rohrenden und die Schweißnaht gegen Korrosion und mechanische Beschädigungen geschützt werden. Eine Lösung hierfür ist aus DE 10 2015 204 926 A1 bekannt.

Aufgabe der Erfindung ist es, bekannte Verfahren zum Schutz von Rohren und Rohrverbindungen zu verbessern.

Erfindungsgemäß wird diese Aufgabe durch ein Metallrohr mit einer Korrosionsschutzhülle aus einem Thermoplast und einer die Korrosionsschutzhülle umschließenden Schutzummantelung gelöst, auf dessen Rohrende eine längsverschiebliche Hülse aus Kunststoff aufgeschoben ist. Das Metallrohr weist auf einem Endlängsabschnitt an seinen beiden Rohrenden keine Korrosionsschutzhülle und keine Schutzummantelung auf, damit die Rohrenden zweier Rohre an deren Stirnseiten miteinander verschweißt werden können. Die Länge der längsverschieblichen Hülse ist so bemessen, dass die Hülse die nicht ummantelten Endlängsabschnitte zweier verschweißter Metallrohre derart überbrücken kann, dass sich die Hülse von der Schutzummantelung des einen Metallrohres bis zu der Schutzummantelung eines nächsten mit dem einen Metallrohr verschweißten Metallrohrs erstreckt.

Die Hülse hat zwei Stirnenden und eine äußere sowie eine innere Wandoberfläche.

Ein weiter Aspekt der Erfindung ist ein Rohrverbund aus wenigstens zwei Metallrohren, die an ihren Stirnenden mittels einer Schweißnaht miteinander verbunden sind. Von den Metallrohren weist wenigstens eines an einem Rohrende eine ursprünglich längsverschiebliche Hülse auf, die bei dem Rohrverbund derart über die beiden nicht von einer Korrosionsschutzhülle bedeckten Endabschnitte der miteinander verschweißten Metallrohre gebildeten Verbindungsabschnitt geschoben ist, dass die Hülse den Verbindungsabschnitt über dessen gesamte Länge bedeckt. Wenigstens zwischen den beiden stirnseitigen Längsabschnitten der inneren Wandoberfläche der längsverschieblichen Hülse und der innen gegenüberliegenden Außenoberfläche der Metallrohre ist eine ursprünglich quellende Dichtmasse derart vorgesehen, dass die ursprünglich längsverschiebliche Hülse an ihren Stirnenden vollumfänglich und vorzugsweise dicht mit den stirnseitigen Längsabschnitten der miteinander verschweißten Metallrohre verbunden ist.

Vorzugsweise ist der von der ursprünglich längsverschieblichen Hülse umschlossene Zwischenraum zwischen der inneren Wandoberfläche der ursprünglich längsverschieblichen Hülse und der der inneren Wandoberfläche gegenüberliegenden Außenoberfläche des Rohrverbunds vollständig oder zumindest nahezu vollständig mit der ursprünglich quellenden Dichtmasse aufgefüllt.

Eine ursprünglich quellende Dichtmasse unterscheidet sich von anderen Dichtmassen dadurch, dass die ursprünglich quellende Dichtmasse bei ihrer Anwendung quillt und somit sicherstellt, dass eine mit der Dichtmasse aufzufüllender Raum zumindest nahezu vollständig aufgefüllt wird. Im vorliegenden Fall bedeutet dies, dass die ursprünglich quellende Dichtmasse sicherstellt, dass die ursprünglich längsverschiebliche Hülse an ihren Stirnenden im Ergebnis wirklich vollumfänglich und vorzugsweise dicht mit den stirnseitigen Längsabschnitten der miteinander verschweißten Metallrohre verbunden ist, um ein Verschieben der Hülse zu verhindern und Hohlräume, in denen sich Flüssigkeit sammeln könnte, möglichst zu vermeiden .

Durch die ursprünglich quellende Dichtmasse wird die ursprünglich längsverschiebliche Hülse zuverlässig fixiert. Weil die ursprünglich quellende Dichtmasse von der ursprünglich längsverschieblichen Hülse umschlossen ist, wird auch die ursprünglich quellende Dichtmasse von der ursprünglich längsverschieblichen Hülse vor mechanischen Beschädigungen geschützt..

Vorzugsweise beträgt die Länge der längsverschieblichen Hülse mindestens 5cm mehr als die doppelte Länge des nicht mit einer Schutzummantelung versehenen Endlängsabschnitts des Metallrohres, auf dessen Ende die längsverschiebliche Hülse aufgeschoben ist.

Vorzugsweise weist das Metallrohr an seinen beiden Längsenden einen nicht mit einer Schutzummantelung versehenen Endlängsabschnitt auf. Die Länge der beiden nicht mit einer Schutzummantelung versehenen Endlängsabschnitte eines Metallrohres ist vorzugsweise wenigstens annähernd gleich.

Vorzugsweise ist die längsverschiebliche Hülse nur auf ein Rohrende aufgeschoben, so dass das Metallrohr nur eine einzige längsverschiebliche Hülse aufweist.

Die Korrosionsschutzhülle wird vorzugsweise von einer Thermoplastummantelung des Metallrohres gebildet.

Vorzugsweise weist das Metallrohr nahe der jeweiligen Längsenden seiner Schutzummantelung jeweils ein die Schutzummantelung vollumfänglich umschließendes Quellband auf, das von einer quellenden Dichtmasse gebildet ist oder diese enthält. Die Länge der längsverschieblichen Hülse beträgt in diesem Fall vorzugsweise mehr als das Doppelte des Abstands des Quellbandes an einem Längsende des Metallrohres von der Stirnfläche des Metallrohres an diesem Längsende.

Die Schutzummantelung weist vorzugsweis faserverstärktes Duroplast, beispielsweise faserverstärktes Epoxidharz, faserverstärktes Vinylesterharz oder faserverstärktes Polyesterharz auf. Die Schutzummantelung ist von mehreren Lagen Glasfasermatte oder Glasfasergewebe oder einer Kombination aus beiden gebildet, wobei die Lagen im Naß-in-NaßVerfahren unter Verwendung eines Vinylester-, Polyester- oder Epoxidharzes auf die Korrosionsschutzhülle aufgebracht sind.

Der Rohrverbund aus zwei an ihren Längsenden miteinander verschweißten Metallrohren umfasst zwei an ihren Stirnflächen miteinander verschweißte Metallrohre mit jeweils einer Korrosionsschutzhülle aus einem Thermoplast und einer die Korrosionsschutzhülle umschließenden Schutzummantelung. An eine die beiden Metallrohre miteinander verbindende Schweißnaht schließen sich in beide Längsrichtungen jeweils ein nicht mit einer Schutzummantelung versehener Endlängsabschnitte des jeweiligen Metallrohres an. Ein von den beiden nicht mit einer Schutzummantelung versehenen Endlängsabschnitte der miteinander verschweißten Metallrohre gebildete Verbindungsabschnitt ist mit einer nach dem Verschweißen aufgebrachten Korrosionsschutzschicht versehen, die vorzugsweise von einem gewickelten Butylkautschukband gebildet ist. Alternativ kann auch eine Polyurethan-Beschichtung oder eine Schrumpfmanschette vorgesehen sein.

Der Verbindungsabschnitt ist vollständig von der längsverschieblichen Hülse bedeckt. An oder nahe der Längsenden der längsverschieblichen Hülse ist diese über vollumfänglich angeordnete Dichtungen vorzugsweise dicht mit der Schutzummantelung des jeweiligen Metallrohres verbunden, so dass sich der Verbindungsabschnitt in einem von der längsverschieblichen Hülse und den Dichtungen abgeschlossenen Raum befindet. Die Dichtungen sind von einer ursprünglich quellenden Dichtmasse gebildet und können beispielsweise Quellbanddichtungen sein.

Ein Verfahren zum Herstellen eines Rohrverbundes aus zwei an ihren Längsenden miteinander verschweißten Metallrohren umfasst die folgenden Schritte:
- Bereitstellen von zwei Metallrohren mit jeweils einer Korrosionsschutzhülle aus einem Thermoplast und einer die Korrosionsschutzhülle umschließenden Schutzummantelung, wobei die beiden Metallrohre an ihren miteinander zu verschweißenden Längsenden jeweils einen nicht von einer Korrosionsschutzhülle bedeckten Endabschnitt aufweisen und auf eine Rohrende einer der beiden Metallrohre eine längsverschiebliche Hülse aufgeschoben ist, deren Länge vorzugsweise größer ist, als die Länge der beiden nicht von einer Korrosionsschutzhülle bedeckten Endabschnitt der Metallrohre zusammengenommen
- Verschweißen der beiden Metallrohre an ihren Stirnseiten; und
- Verschieben der längsverschieblichen Hülse, bis diese einen von den beiden nicht von einer Korrosionsschutzhülle bedeckten Endabschnitten der miteinander verschweißten Metallrohre gebildeten Verbindungsabschnitt über dessen gesamte Länge bedeckt.

Vorzugsweise wird nach dem Verschweißen und vor dem Verschieben der längsverschieblichen Hülse eine Korrosionsschutzschicht auf die nicht von einer Korrosionsschutzhülle bedeckten Endabschnitte aufgebracht. Dies geschieht vorzugsweise, indem die nicht von einer Korrosionsschutzhülle bedeckten Endabschnitte mit einem Butylkautschukband umwickelt werden. Alternativ kann auch eine Polyurethan-Beschichtung oder eine Schrumpfmanschette aufgebracht werden.

Vorzugsweise werden die Längsenden der längsverschieblichen Hülse nach deren Verschieben gegenüber den Schutzummantelungen der verschweißten Metallrohre abgedichtet. Dies geschieht vorzugsweise mittels einer quellenden Dichtmasse, die in die Zwischenräume zwischen den inneren Wandoberflächen an den Stirnenden der Hülse und der jeweils gegenüberliegenden Außenoberfläche des Rohrverbunds eingebracht wird oder auf eine Oberfläche aufgebracht ist. Beispielsweise wird auf die Schutzummantelungen an entsprechender Stelle jeweils vollumfänglich eine Quellbanddichtung aufgebracht, bevor die längsverschiebliche Hülse in ihre endgültige Position gebracht wird. Nachdem die längsverschiebliche Hülse in ihre endgültige Position gebracht wurde, werden die Quellbanddichtungen quellen gelassen. Alternativ kann die quellende Dichtmasse auch erst nach dem endgültigen Positionieren der längsverschieblichen Hülse in die Zwischenräume zwischen den inneren Wandoberflächen an den Stirnenden der Hülse und der jeweils gegenüberliegenden Außenoberfläche des Rohrverbunds eingebracht werden. Hierfür ist beispielsweise ein quellender Schaum beispielsweise ein Polyurethan-Schaum geeignet.

In Bezug auf die Schutzummantelung sind die folgenden Ausführungsvarianten bevorzugt.

Vorzugsweise ist wenigstens eine Lage der Duroplastummantelung ein Laminat, das von kreuzgewickelten Textilglasrovings oder Glasfasermatten oder Glasfasergeweben oder einer Kombination dieser Gläser gebildet ist. Kreuzgewickelt bedeutet, dass die Gläser durch Wickeln auf das Rohr aufgebracht werden, wobei die eine Glaslage mit einem ersten Wicklungssinn und eine zweite Glaslage mit einem diesem Wicklungssinn entgegengesetzten Wicklungssinn so aufgebracht werden, dass sich die beiden Glaslagen überkreuzen und im Ergebnis miteinander verwoben sind.

Die Thermoplastummantelung ist vorzugsweise direkt auf das Metallrohr aufgebracht. Das Metallrohr ist vorzugsweise ein Stahlrohr. Alternativ kann jedoch auch das Rohr selbst ein Kunststoffrohr sein, dessen Wandung von einem Thermoplast gebildet ist.

Gemäß einer besonders bevorzugten Ausführungsvariante besitzt die Duroplastummantelung mehrere Laminatlagen, nämlich beispielsweise eine innere Lage oder zwei innere Lagen, die jeweils von einer Glasfasermatte oder Glasfasergewebe mit einer Grammatur zwischen 300 und 500 g/m², vorzugsweise von etwa 450 g/m² gebildet sind. Als innere Lage oder innere Lagen sind hierbei jene Lagen der Duroplastummantelung bezeichnet, die der Thermoplastummantelung am nächsten gelegen sind.

Die innere Lage oder die inneren Lagen sind dabei vorzugsweise von gewickelten Glasfaserbahnen gebildet, die eine Breite von weniger als 35 cm haben. Wenn die die Breite der Glas-Faserbahn beispielsweise 30 cm beträgt und diese mit einem Überlapp von 3 cm um das Rohr gewickelt werden, hat die resultierende Wicklung im Ergebnis eine Steigung von 27 cm.

Weiterhin ist es bevorzugt, wenn die Duroplastummantelung wenigstens eine mittlere Lage oder zwei mittlere Lagen aufweist, die jeweils von einer Glasfasermatte oder Glasfasergewebe mit einer Grammatur zwischen 800 g/m² und 1200 g/m² gebildet sind, und zwar vorzugsweise mit einer Grammatur von etwa 1000 g/m², z.B. 1030 g/m². Die mittlere Lage oder die mittleren Lagen der Duroplastummantelung befinden sich in radialer Richtung des Rohres zwischen der wenigstens einen inneren Lage und der Außenlage.

Die wenigstens eine mittlere Lage der Duroplastummantelung ist vorzugsweise von einer gewickelten Glasfaserbahn mit einer Breite von maximal 40 cm gebildet. Bei einem Überlapp von etwa 5 cm ergibt dies eine Steigung von 35 cm pro Wicklung.

Die Thermoplastummantelung des Rohres ist vorzugsweise von Polyethylen, Polypropylen, Fusion-Bonded Epoxy (FBE) oder Polyurethan gebildet, wobei Polyethylen der bevorzugteste Werkstoff ist.

Weiterhin ist es bevorzugt, dass die einzelnen Laminatlagen auch aus endlosem radialen Wickelroving sowie einem unidirektionalem Textilglasgewebe im Wechsel aufgebaut sind.

In einigen Ausführungsvarianten weit die Duroplastummantelung Füllstoffe wie zum Beispiel Quarzsand auf, die die Schlagfestigkeit erhöhen.

Das Rohr hat vorzugsweise einen Nenndurchmesser zwischen 100 und 2.500 mm und die Dicke der Duroplastummantelung beträgt vorzugsweise zwischen 2.5 und 5 mm, besonders bevorzugt etwa 3 mm.

Weitere Merkmale und Eigenschaften sowie Varianten erfindungsgemäßer Rohre und erfindungsgemäßer Rohrverbände sind der nachfolgenden Beschreibung von Ausführungsbeispielen zu entnehmen. Anhand der nachfolgenden Ausführungsbeispiele wird somit die Erfindung näher erläutert. Von den die Ausführungsbeispiele illustrierenden Figuren zeigen die einzelnen Figuren folgendes:
- Fig. 1:: ist eine perspektivische Ansicht eines Abschnitts eines Rohrverbundes aus zwei an ihren Stirnseiten miteinander verschweißten Metallrohren;
- Fig. 2.:: eine perspektivische Detailansicht eines erfindungsgemäßen Rohverbunds; und
- Fig. 3:: ist eine Schnittdarstellung eines Ausschnitts eines erfindungsgemäßen Rohverbunds.

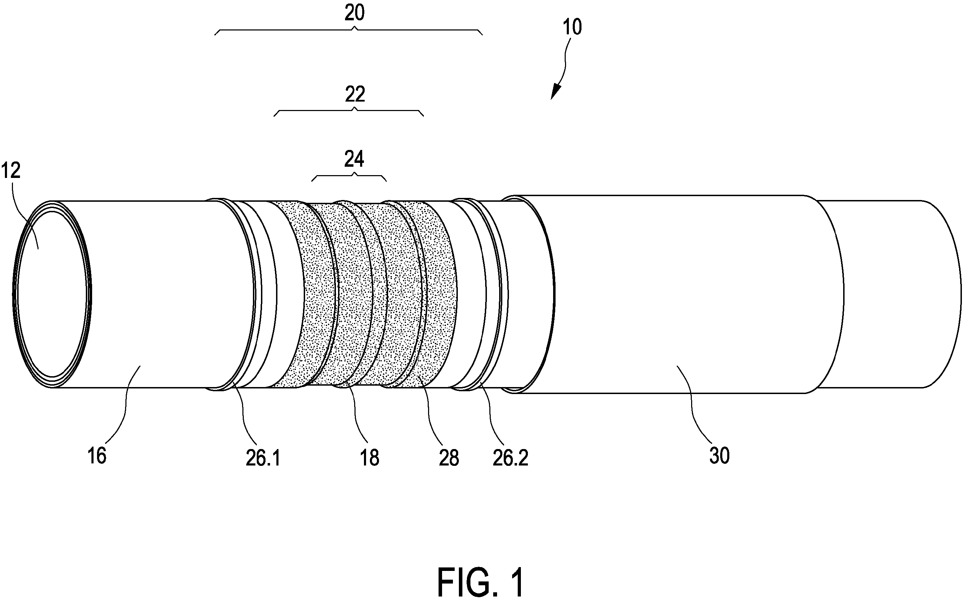

Fig. 1 ist eine ausschnittsweise perspektivische Ansicht eines Abschnitts eines Rohrverbundes 10 aus zwei an ihren Stirnseiten miteinander verschweißten Metallrohren 12, die jeweils eine Thermoplastummantelung 14 und eine die Thermoplastummantelung 12 umschießende faserverstärkte Duroplastummantelung 16 aufweisen. Die Thermoplastummantelung 14 dient als Korrosionsschutzhülle und die faserverstärkte Duroplastummantelung 16 dient als Schutzummantelung, die gegen mechanische Beschädigungen schützt.

Der dargestellte Rohrverbund 10 hat einen Nenndurchmesser von 500 mm und ist aus zwei spiralgeschweißten, durch eine Schweißnaht 18 miteinander verbundene Metallrohren 12 zusammengesetzt.

Eine Wandung 20 des jeweiligen Metallrohrs 12 besteht aus Stahl und trägt die dem Korrosionsschutz dienende Thermoplastummantelung 14 aus Polyethylen (PE).

In Verbindungsabschnitt 20 ist teilweise keine Korrosionsschutzhülle 14 und auch keine Schutzummantelung 16 vorhanden, da diese ein Verschweißen der Rohrenden behindern würden. Konkret ist in einem inneren Teilabschnitt 22 des Verbindungsabschnitts 20 weder eine Korrosionsschutzhülle 14 noch eine Schutzummantelung 16 vorhanden. In einem längeren Teilabschnitt 24 fehlt die Schutzummantelung. Erst außerhalb dieses längeren Teilabschnitts 24 beginnt die jeweilige Schutzummantelung 16 der beiden Metallrohre 12. Nahe den Längsenden des Verbindungsabschnitts 20 sind jeweils vollumfänglich Quellbanddichtungen 26.1 und 26.2 vorgesehen.

In dem inneren Teilabschnitt 22 des Verbindungsabschnitts 20 ist der Rohrverbund in der Nähe der Schweißnaht 18 mit einer Korrosionsschutzschicht 28 versehen, die aus einem um den Rohrverbund in diesem Bereich rumgewickelten Butylkautschukband besteht.

Fig. 1 zeigt den Rohrverbund 10 nach dem Verschweißen der beiden Metallrohre 12 und dem Aufbringen der beiden Quellbanddichtungen 26.1 und 26.2 sowie dem Aufbringen der Korrosionsschutzschicht 28. Um den Verbindungsabschnitt 20 vollständig und dicht abzudecken ist eine längsverschiebliche Hülse 30 vorgesehen, die in Längsrichtung des Rohrverbunds 10 über den Verbindungsabschnitt 20 geschoben werden kann. Die Quellbanddichtungen 26.1 und 26.2 liegen dann in der Nähe der Längsenden die längsverschieblichen Hülse 30 an deren Innenwand an und stellen nach dem Quellen eine zuverlässige Dichtung zwischen der jeweiligen Schutzummantelung 26 des jeweiligen Metallrohrs 12 und der längsverschieblichen Hülse 30 dar.

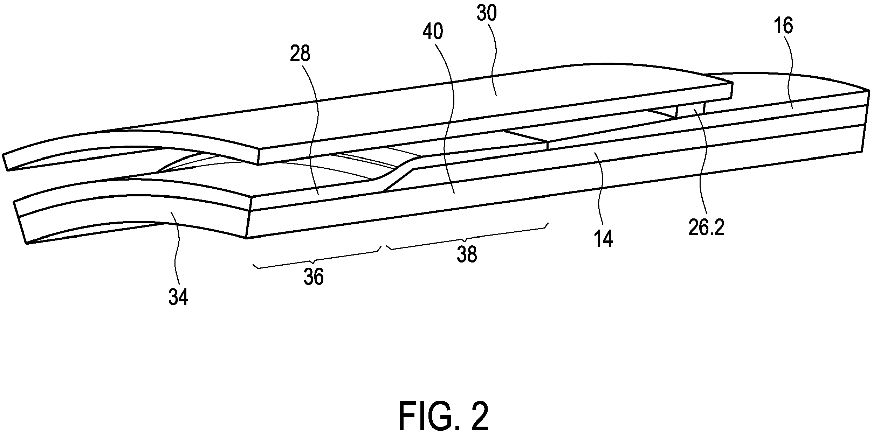

Fig. 2 zeigt dies in einer ausschnittsweisen perspektivischen Detaildarstellung. Zur erkennen ist das innenliegende Metallrohr 12 sowie die auf dieses außen aufgebrachte Korrosionsschutzhülle 14 und die die Korrosionsschutzhülle umgebende Schutzummantelung 16. Die Korrosionsschutzhülle 14 und die Schutzummantelung 16 erstrecken sich mit Ausnahme eines vergleichsweise kurzen, an die Längsenden des jeweiligen Metallrohrs 12 anschließenden Endlängsabschnitts 32 über die gesamte Länge des Metallrohrs 12. Sowohl die Korrosionsschutzhülle 14 als auch die Schutzummantelung 16 werden nicht vor Ort auf das Metallrohr 12 aufgebracht. Vielmehr wird das Metallrohr 12 mit der Korrosionsschutzhülle 14 und der Schutzummantelung 16 zum Verlegeort geliefert. Auch die längsverschiebliche Hülse 30 kann schon auf ein Längsende eines Metallrohrs 12 aufgeschoben sein.

Fig. 2 ist zu entnehmen, dass Metallrohr 12 unmittelbar in seine Stirnseite 34 angrenzend weder eine Korrosionsschutzhülle 14 noch eine Schutzummantelung 16 aufweist. An diesen Längsabschnitt 36 des Metallrohrs 12 schließt sich ein Längsabschnitt 38 an, an dem das Metallrohr 12 nur mit der Korrosionsschutzhülle 14 ummantelt ist, nicht aber mit der Schutzummantelung 16.

So, wie das Metallrohr 12 zum Verlegeort angeliefert wird, liegt daher zum einen ein Teil der metallischen Rohrwand frei sowie ein Teil der Korrosionsschutzhülle 14.

Erst nach dem Verschweißen zweier Metallrohre 12 zu einem Rohrverbund 10 werden die Teile des Verbindungsabschnitt 20, in denen die metallische Rohrwand 38 freiliegt und in denen die Korrosionsschutzhülle 14 freiliegt mit der Korrosionsschutzschicht 28 aus einem Butylkautschukband bedeckt. Auch die Quellbanddichtungen 26.1 und 26.2 werden erst nach dem Verschweißen aufgebracht und die längsverschiebliche Hülse 30 dann über den Verbindungsabschnitt 20 geschoben, so dass sich der in Fig. 2 abgebildete Zustand ergibt.

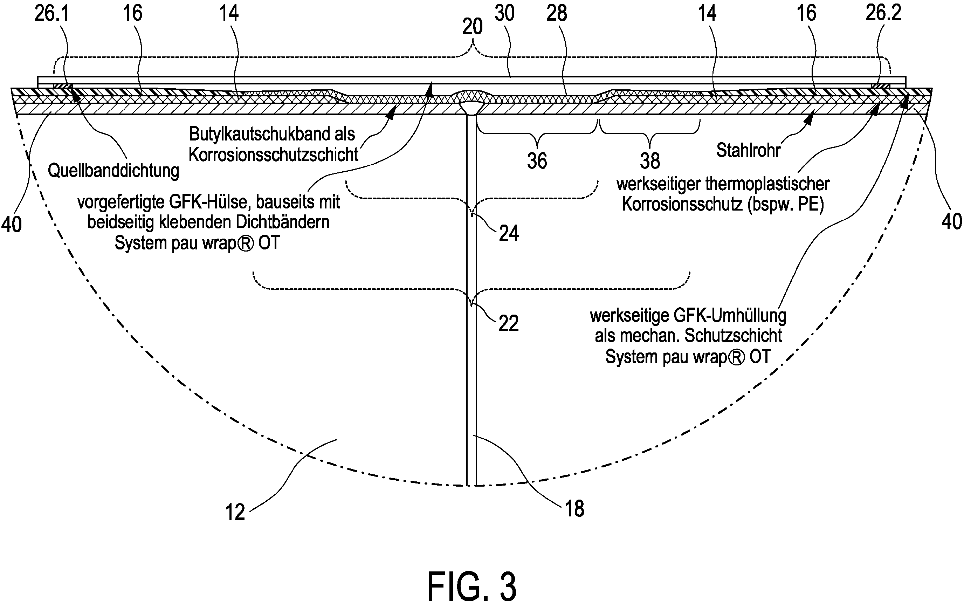

Fig. 3 zeigt den Rohrverbund aus Fig. 1 in einer ausschnittsweisen längsgeschnittenen Ansicht. Zu erkennen sind die Schweißnaht 18 sowie die metallische Rohrwand 38 der beiden Metallrohre 12. Zu erkennen sind auch die beiden Korrosionsschutzhüllen 14 und Schutzummantelungen 16 sowie die erst nach dem Verschweißen aufgebrachte Korrosionsschutzschicht 28. Weiterhin ist zu erkennen, wie der Verbindungsabschnitt 20 vollständig und dicht von der längsverschieblichen Hülse 30 abgedeckt ist, wobei die beiden Quellbanddichtungen 26.1 und 26.2 sicherstellen, dass der von der längsverschieblichen Hülse 30 umschlossene Verbindungsabschnitt 20 gegenüber der Umgebung dicht abgeschlossen ist.

Die Dicke der Thermoplastummantelung 14 entspricht in etwa der Dicke der faserverstärkten Duroplastummantelung 16. Beide sind etwa 3mm bis 5mm dick. Die Duroplastummantelung 16 kann auch etwas dünner sein, als die Thermoplastummantelung 14 und z.B. 2,5 bis 3mm dick sein, während die Thermoplastummantelung 14 bis zu 5mm dick ist.

Die Duroplastummantelung 16 ist vorzugsweise ein Laminat mit ein oder zwei inneren Lagen und ein oder zwei mittleren Lagen sowie einer Außenlage.

Jede dieser Lagen ist von Glasfaser-verstärkten Kunststoff gebildet, und zwar von um das Metallrohr 12 gewickelten Textilglasfasern, die in eine Harzmatrix aus Vinylesterharz, Polyesterharz oder Epoxidharz eingebettet sind. Insbesondere die mittleren Laminatlagen können Füllstoffe wie zum Beispiel Quarzsand enthalten.

Die Faserbahnen, die die innere Lage oder die inneren Lagen bilden sowie die Faser-bahnen, die die mittlere Lage oder die mittleren Lagen bilden sind dabei derart im das Metallrohr 12 gewickelt, dass sich die beiden Ränder einer jeweiligen Faserbahn um etwa zwei bis fünf Zentimeter überlappen.

Die innere Lage oder die inneren Lagen sind im Ausführungsbeispiel von einer Glaserfasermatte mit einer Grammatur von etwa 450 g/m² gebildet, während die mittlere Lage oder die mittleren Lagen von einer Glaserfasermatte mit einer Grammatur von etwa 1030 g/m² gebildet sind.

Die Außenlage kann im Unterschied zu der inneren Lage oder den inneren Lagen und der mittleren Lage oder den mittleren Lagen nicht mit einen für jede Lage einheitlichen Wicklungssinn aufgebacht sein, sondern kann kreuzgewickelt sein, das heißt die Außenlage ist von zwei Faserbahnen gebildet, die mit gegensinnigen Wicklungssinn gewickelt sind und sich überkreuzen, so dass sie im Ergebnis ineinander verwoben sind.

Alle Lagen sind nass-in-nass auf Thermoplastummantelung 14 aufgebracht, das heißt eine jeweils folgende Lage wird auf die vorangehende Lage aufgebracht, bevor das die Harzmatrix bildende Harz der vorangehenden Lage ausgehärtet ist. Auf diese Weise sind die Lagen der Schutzummantelung 16 innig miteinander verbunden.

Der Glasanteil der Duroplastummantelung 16 beträgt mindestens 35 Masse Prozent, d.h. der Harzanteil ist kleiner als 65 Prozent.

Am Verlegeort werden zwei Metallrohren mit jeweils einer Korrosionsschutzhülle aus einem Thermoplast und einer die Korrosionsschutzhülle umschließenden Schutzummantelung stirnseitig miteinander verschweißt. Vor dem Verschweißen ist auf eines der beiden Metallrohre eine längsverschiebliche Hülse aufgeschoben worden, die dann nach dem Verschweißen über den Verbindungsabschnitt geschoben werden kann.

Die längsverschiebliche Hülse hat eine Länge, die größer ist, als die Länge der beiden nicht von einer Korrosionsschutzhülle bedeckten Endabschnitt der Metallrohre zusammengenommen.

Nach dem Verschweißen der beiden Metallrohre und vor dem Verschieben der längsverschieblichen Hülse wird eine Korrosionsschutzschicht auf die nicht von einer Korrosionsschutzhülle bedeckten Endabschnitte der miteinander verschweißten Metallrohre aufgebracht. Dies geschieht, indem die nicht von einer Korrosionsschutzhülle bedeckten Endabschnitte mit einem Butylkautschukband umwickelt werden.

Nach dem Verschweißen und dem Aufbringen der Korrosionsschutzschicht wird die längsverschiebliche Hülse so weit verschoben, bis diese einen von den beiden nicht von einer Korrosionsschutzhülle bedeckten Endabschnitten der miteinander verschweißten Metallrohre gebildeten Verbindungsabschnitt über dessen gesamte Länge bedeckt.

Nach dem Verschieben der der längsverschieblichen Hülse werden die Längsenden der längsverschieblichen Hülse gegenüber den Schutzummantelungen der verschweißten Metallrohre abgedichtet. Dies geschieht, indem auf die Schutzummantelungen an entsprechender Stelle jeweils vollumfänglich eine Quellbanddichtung aufgebracht wird, bevor die längsverschiebliche Hülse in ihre endgültige Position gebracht wird. Nachdem die längsverschiebliche Hülse in ihre endgültige Position gebracht wurde, werden die Quellbanddichtungen quellen gelassen.

## Patentansprüche

1. Rohrverbund (10) aus zwei an ihren Stirnflächen miteinander verschweißten Metallrohren (12) mit jeweils einer Korrosionsschutzhülle (14) aus einem Thermoplast und einer die Korrosionsschutzhülle umschließenden Schutzummantelung (16), wobei sich an eine die beiden Metallrohre (12) miteinander verbindende Schweißnaht (18) in beide Längsrichtungen jeweils nicht mit einer Schutzummantelung (16) versehene Endlängsabschnitte des jeweiligen Metallrohres anschließen und einen Verbindungsabschnitt (22) bilden, wobei wenigstens eines der Metallrohre an wenigstens einem Rohrende eine ursprünglich längsverschiebliche Hülse (30) aufweist, die derart über den von den beiden miteinander verschweißten, nicht von einer Korrosionsschutzhülle bedeckten Endabschnitten der miteinander verschweißten Metallrohre gebildeten Verbindungsabschnitt (22) geschoben ist, dass die Hülse den Verbindungsabschnitt (22) über dessen gesamte Länge bedeckt, wobei wenigstens zwischen zwei stirnseitigen Längsabschnitten der inneren Wandoberfläche der längsverschieblichen Hülse und der innen gegenüberliegenden Außenoberfläche der Metallrohre Dichtungen (26.1, 26.2) aus einer Dichtmasse derart vorgesehen sind, dass die ursprünglich längsverschiebliche Hülse (30) zumindest an ihren Stirnenden mittels der x Dichtmasse vollumfänglich mit den stirnseitigen Längsabschnitten der miteinander verschweißten Metallrohre (10) verbunden ist.

2. Rohrverbund (10) gemäß Anspruch 1, **dadurch gekennzeichnet, dass** der von den beiden nicht mit einer Korrosionsschutzhülle (14) versehenen Endlängsabschnitte der miteinander verschweißten Metallrohre gebildete Verbindungsabschnitt (22) mit einer nach dem Verschweißen aufgebrachten Korrosionsschutzschicht (28) versehen ist, die vorzugsweise von einem gewickelten Butylkautschukband gebildet ist und der Verbindungsabschnitt vollständig von der längsverschieblichen Hülse (30) bedeckt ist.

3. Rohrverbund (10) nach Anspruch 1 oder 2, **dadurch gekennzeichnet, dass** die Dichtmasse eine ursprünglich quellende Dichtmasse ist, die bei der Anwendung zunächst quillt, so dass ihr Volumen vor der Anwendung kleiner ist, als nach der Anwendung.

4. Rohrverbund (10) nach wenigstens einem der Ansprüche 1 bis 3, **dadurch gekennzeichnet, dass** die Dichtmasse Polyurethan enthält, insbesondere ein Polyurethan-Schaum ist oder dass die Dichtungen (26.1, 26.2) Quellbanddichtungen sind.

5. Rohrverbund (10) nach wenigstens einem der Ansprüche 1 bis 4, **dadurch gekennzeichnet, dass** der von der ursprünglich längsverschieblichen Hülse (30) umschlossene Zwischenraum zwischen der inneren Wandoberfläche der ursprünglich längsverschieblichen Hülse (30) und der der inneren Wandoberfläche gegenüberliegenden Außenoberfläche des Rohrverbunds mit der ursprünglich quellenden Dichtmasse aufgefüllt ist.

6. Metallrohr mit einer Korrosionsschutzhülle (14) aus einem Thermoplast und einer die Korrosionsschutzhülle umschließenden Schutzummantelung (16), auf dessen Rohrende eine längsverschiebliche Hülse (30) aus Kunststoff aufgeschoben ist und welches einen Endlängsabschnitt (36) an seinen beiden Rohrenden keine Korrosionsschutzhülle und keine Schutzummantelung aufweist, wobei die Länge der längsverschieblichen Hülse ist so bemessen ist, dass die Hülse die nicht ummantelten Endlängsabschnitte zweier verschweißter Metallrohre (12) derart überbrücken kann, dass sich die Hülse von der Schutzummantelung (16) des einen Metallrohres bis zu der Schutzummantelung (16) eines nächsten, mit dem einen Metallrohr verschweißten Metallrohrs erstreckt.

7. Metallrohr gemäß Anspruch 6, bei dem die Länge der längsverschieblichen Hülse (30) mindestens 5cm mehr als die doppelte Länge des nicht mit einer Schutzummantelung versehenen Endlängsabschnitts des Metallrohres (12) beträgt, auf dessen Ende die längsverschiebliche Hülse (30) aufgeschoben ist.

8. Metallrohr gemäß Anspruch 6 oder 7, **dadurch gekennzeichnet, dass** das Metallrohr (12) an seinen beiden Längsenden einen nicht mit einer Schutzummantelung versehenen Endlängsabschnitt (26 + 38) aufweist.

9. Metallrohr gemäß wenigstens einem der Ansprüche 6 bis 8, **dadurch gekennzeichnet, dass** die längsverschiebliche Hülse (30) nur auf ein Rohrende aufgeschoben ist, so dass das Metallrohr (12) nur eine einzige längsverschiebliche Hülse (30) aufweist.

10. Metallrohr gemäß wenigstens einem der Ansprüche 6 bis 9, **dadurch gekennzeichnet, dass** das Metallrohr (12) nahe der jeweiligen Längsenden seiner Schutzummantelung (16) jeweils eine die Schutzummantelung vollumfänglich umschließende Quellbanddichtung (26.1, 26.2) aufweist.

11. Verfahren zum Herstellen eines Rohrverbundes (10) aus zwei an ihren Längsenden miteinander verschweißten Metallrohren (12) umfasst die folgenden Schritte:
- Bereitstellen von zwei Metallrohren (12) mit jeweils einer Korrosionsschutzhülle (14) aus einem Thermoplast und einer die Korrosionsschutzhülle umschließenden Schutzummantelung (16), wobei die beiden Metallrohre (12) an ihren miteinander zu verschweißenden Längsenden jeweils einen nicht von einer Korrosionsschutzhülle (14) bedeckten Endabschnitt aufweisen und auf eine Rohrende einer der beiden Metallrohre (12) eine längsverschiebliche Hülse (30) aufgeschoben ist, deren Länge vorzugsweise größer ist, als die Länge der beiden nicht von einer Korrosionsschutzhülle (14) bedeckten Endabschnitt der Metallrohre zusammengenommen
- Verschweißen der beiden Metallrohre (12) an ihren Stirnseiten (34);
- Verschieben der längsverschieblichen Hülse (30), bis diese einen von den beiden nicht von einer Korrosionsschutzhülle bedeckten Endabschnitten der miteinander verschweißten Metallrohre gebildeten Verbindungsabschnitt über dessen gesamte Länge bedeckt; und
- vollumfängliches Abdichten der Längsenden der längsverschieblichen Hülse (30) gegenüber den Schutzummantelungen der verschweißten Metallrohre mittels einer Dichtmasse, die in die Zwischenräume zwischen den inneren Wandoberflächen an den Stirnenden der Hülse und der jeweils gegenüberliegenden Außenoberfläche des Rohrverbunds eingebracht wird oder auf eine Oberfläche aufgebracht ist.

12. Verfahren nach Anspruch 11, **dadurch gekennzeichnet, dass** nach dem Verschweißen und vordem Verschieben der längsverschieblichen Hülse (30) eine Korrosionsschutzschicht (28) auf die nicht von einer Korrosionsschutzhülle (24) bedeckten Endabschnitte aufgebracht wird.

13. Verfahren nach Anspruch 12, **dadurch gekennzeichnet, dass** das Aufbringen der Korrosionsschutzschicht (28) durch Umwickeln wenigstens der nicht von einer Korrosionsschutzhülle bedeckten Endabschnitte mit einem Butylkautschukband erfolgt.

14. Verfahren nach mindestens einem der Ansprüche 11 bis 13, **dadurch gekennzeichnet, dass** der von der Hülse (30) umschlossene Zwischenraum zwischen der inneren Wandoberfläche der Hülse (30) und der der inneren Wandoberfläche gegenüberliegenden Außenoberfläche des Rohrverbunds (10) mit einer Dichtmasse aufgefüllt wird.

15. Verfahren nach wenigstens einem der Ansprüche 11 bis 14, **dadurch gekennzeichnet, dass** die Längsenden der längsverschieblichen Hülse (30) nach deren Verschieben gegenüber den Schutzummantelungen der verschweißten Metallrohre abgedichtet werden, indem auf die Schutzummantelungen an entsprechender Stelle jeweils vollumfänglich eine Quellbanddichtung (26.1, 26.2) aufgebracht wird, bevor die längsverschiebliche Hülse (30) in ihre endgültige Position gebracht wird und die Quellbanddichtungen (26.1, 26.2) quellen gelassen werden, nachdem die längsverschiebliche Hülse (30) in ihre endgültige Position gebracht wurde.
